# EUROPÄISCHE PATENTSCHRIFT

(11) **EP 0 923 743 B1**
(45) Veröffentlichungstag und Bekanntmachung des Hinweises auf die Patenterteilung: **19.06.2002**
(21) Anmeldenummer: 97940138.7
(22) Anmeldetag: 28.08.1997
(51) Int. Cl.: G01R 31/00

(54) **VERFAHREN ZUM PRÜFEN DER BAUTEILE EINES SYSTEMS IN EINEM KRAFTFAHRZEUG**
PROCESS FOR INSPECTING THE COMPONENTS OF A SYSTEM IN A MOTOR VEHICLE
PROCEDE POUR CONTROLER LES ELEMENTS D'UN SYSTEME DANS UN VEHICULE AUTOMOBILE

(30) Priorität: 04.09.1996 DE 19635839
(43) Veröffentlichungstag der Anmeldung: 23.06.1999
(73) Patentinhaber: Continental Teves AG & Co. oHG, 60488 Frankfurt (DE)
(72) Erfinder: EHMER, Norbert, D-65760 Eschborn (DE)
(74) Vertreter: Blum, Klaus-Dieter
(86) Internationale Anmeldenummer: EP9704693
(87) Internationale Veröffentlichungsnummer: WO9810300

(56) Entgegenhaltungen:
- EP-A- 0 465 793
- EP-A- 0 599 488
- WO-A-89/06839
- US-A- 4 532 594

## Beschreibung

Die vorliegende Erfindung betrifft ein Verfahren zum Prüfen der Funktionsfähigkeit von Bauteilen eines Systems in einem Kraftfahrzeug, wobei das System wenigstens ein software-betriebenes Steuergerät aufweist, das mit einem Leitgerät verbindbar ist, wobei mittels des Leitgerätes Software in das Steuergerät geladen werden kann und wobei vor einer Prüfung der Funktionsfähigkeit der Bauteile des Systems von dem Leitgerät eine Prüfsoftware in das Steuergerät und nach dem Durchführen der Prüfung die Betriebssoftware, mittels der die Steuerung und/oder die Regelung des Systems erfolgt, von dem Leitgerät in das Steuergerät geladen werden.

Aus der EP-A-0 599 488 ist ein vergleichbares Verfahren zum Prüfen der Funktionsfähigkeit eines Bauteils, nämlich des Druckers, eines Netzwerkes bekannt. Das Prüfen von Komponenten eines Kraftfahrzeugs hat die WO-A-89 06839 zum Gegenstand, die sich hierzu eines austauschbaren Diagnosegerätes bedient.

Der Anmelderin ist auch bereits ein ein Verfahren bekannt, bei dem in dem Steuergerät sowohl die Betriebssoftware zur Steuerung oder Regelung des Systems abgelegt ist sowie ebenfalls dauerhaft eine Prüfsoftware, mittels der eine Überprüfung der Bauteile des Systems auf richtigen Einbau sowie auf die Funktion der Bauteile erfolgt. Ein solches Verfahren wird beispielsweise im Zusammenhang mit einem Antiblockiersystem in einer Bremsanlage eines Kraftfahrzeuges eingesetzt.

Es ist Aufgabe der vorliegenden Erfindung, ein Verfahren vorzuschlagen, das die Prüfung der Funktionsfähigkeit der Bauteile eines Systems mit möglichst geringem Aufwand für Änderungen des Systems und mit geringem Speicherplatzbedarf sowie unter Berücksichtigung von Bauteiltoleranzen ermöglicht.

Erfindungsgemäß wird diese Aufgabe mit einem Verfahren der eingangs genannten Art gelöst, dessen Besonderheit darin besteht, daß abhängig von den bei der Prüfung ermittelten Daten und/oder Toleranzen der verschiedenen Bauteile, Sensoren oder Aktoren Parameter im Steuergerät gespeichert werden, auf die die Betriebssoftware zugreifen kann und mittels derer während des Betriebs eine individuelle Anpassung an alle Komponenten ermöglicht wird.

Fehler werden nicht nur erkannt und behoben, sondern es können auch Abweichungen ausgeglichen werden, die innerhalb einer Toleranz liegen und noch keinen Fehler darstellen, aber unter Umständen die Funktion des gesamten Systems beeinträchtigen können.

Auch ist es bei dem erfindungsgemäßen Verfahren möglich, die Prüfsoftware an Änderungen des Systemes anzupassen. Während es beim Stand der Technik notwendig war, das Steuergerät insgesamt zu ändern, weil die Software ohne Änderungsmöglichkeit in dem Steuergerät abgelegt war, kann bei dem erfindungsgemäß vorgeschlagenen Verfahren die Prüfsoftware geändert werden und über das Leitgerät in das entsprechende Steuergerät geladen werden, wenn die Prüfsoftware benötigt wird. Es muß dann also lediglich die Prüfsoftware in den entsprechenden Leitgeräten abgelegt sein. Die Leitgeräte werden dabei beispielsweise am Ende des Produktionsprozesses benötigt, um eine Prüfung der Bauteile des Systems vorzunehmen sowie in Werkstätten, um in bestimmten Intervallen -zeitabhängig oder aufgrund der seit der letzten Prüfung zurückgelegten Kilometer- oder auch aufgrund eines anderweitig erkannten, aber unter Umständen nicht näher identifizierten Fehlers eine Prüfung der Funktionsfähigkeit der Bauteile des Systems vornehmen zu können.

Bei dem Verfahren nach der Erfindung wird nach dem Durchführen der Prüfung die die Prüfsoftware durch die Betriebssoftware ersetzt. Dadurch wird der insgesamt benötigte Speicherplatzbedarf gering. Als Vorteil erweist es sich dabei, daß während des Prüfvorganges die Betriebssoftware nicht in dem Steuergerät abgelegt ist, sondern nur die Prüfsoftware. Dadurch steht der Prüfsoftware während des Prüfvorganges der volle Platz und die gesamte Kapazität des Steuergerätes zur Verfügung.

Bei einer vorteilhaften Ausgestaltung des Verfahren nach Anspruch 2 erfolgt das Laden der Prüfsoftware nach dem Herstellen der Verbindung zwischen Steuergerät und Leitgerät selbsttätig. Wenn das Steuergerät mit dem Leitgerät verbunden wird, soll in der Regel eine Prüfung der Funktionsfähigkeit der Bauteile des Systems vorgenommen werden. Eine besonders einfache Handhabung und Durchführung der Prüfung wird erreicht, wenn das Laden der Prüfsoftware selbsttätig erfolgt. Dabei kann auch der Start der Prüfung selbsttätig vorgenommen werden, wenn das Laden der Prüfsoftware beendet ist.

Bei einer weiteren vorteilhaften Ausgestaltung des Verfahrens nach Anspruch 3 werden an das Leitgerät systemspezifische Daten übertragen. Diese systemspezifischen Daten können dabei beispielsweise eine Versionsnummer des Steuergerätes und/oder Informationen über die in das System integrierten Bauteile sein. Von dem Leitgerät wird dann die Prüfsoftware geladen, die den systemspezifischen Daten entspricht.
Dabei können in dem Leitgerät mehrere Prüfprogramme abgelegt sein, die verschiedenen Möglichkeiten der systemspezifischen Daten entsprechen. Es wird dann also in dem Leitgerät die entsprechende Prüfsoftware ausgewählt.

Es ist auch möglich, daß die systemspezifischen Daten in dem Leitgerät dahingehend ausgewertet werden, daß anhand der aufgrund der systemspezifischen Daten identifizierten Bauteile bestimmte Sollwerte und Toleranzen in einer Tabelle entsprechend bestimmt werden und als Teil der Prüfsoftware von dem Leitgerät in das Steuergerät geladen werden.

Ebenso ist es auch denkbar, die Prüfsoftware hinsichtlich einiger Prüfschritte entsprechend anzupassen.

Wenn in dem Leitgerät alle Versionen der Betriebssoftware abgelegt sind, die aufgrund von Systemkonfigurationen und verwendeten Bauteilen auftreten können, kann vor dem Laden der Prüfsoftware in das Steuergerät die Betriebssoftware im Steuergerät gelöscht werden.
Es ist jedoch auch möglich, die Betriebssoftware von dem Steuergerät in das Leitgerät zur zwischenzeitlichen Speicherung umzuladen.

Durch die Maßnahmen nach der Erfindung ist außerdem eine einfache Anpassung an Änderungen der Betriebssoftware möglich, wenn keine Zwischenspeicherung der Betriebssoftware in dem Leitgerät erfolgt, um dieselbe Software anschließend wieder in das Steuergerät zu laden.

In die Leitgeräte der einzelnen Werkstätten wird dann die entsprechend geänderte Betriebssoftware abgelegt. Nach und nach werden die Fahrzeuge dann einer Prüfung hinsichtlich der Bauteile ihrer Systeme unterzogen. Nach Abschluß der Prüfung wird dann jedesmal die entsprechend geänderte Betriebssoftware in die Steuergeräte der einzelnen Kraftfahrzeuge geladen. Nach und nach erfolgt also in allen Fahrzeugen eine Anpassung an die geänderte Betriebssoftware, ohne daß deswegen Steuergeräte in den Kraftfahrzeugen ausgetauscht werden müßten.

Ebenso kann dabei bei der Herstellung des Fahrzeuges berücksichtigt werden, daß verschiedene Fahrzeugtypen unterschiedliche Betriebssoftware benötigen. Es müssen dann also bei der Produktion der Fahrzeuge keine unterschiedlichen Steuergeräte vorgehalten werden.

Bei der Ausgestaltung des Verfahrens nach Anspruch 5 wird nach dem Abschluß der Prüfung die Betriebssoftware selbsttätig geladen oder zurückgeladen. Dadurch erfolgt wiederum eine einfache Handhabung bei der Durchführung der Prüfung.

Bei der Ausgestaltung des Verfahrens nach Anspruch 5 wird die Betriebssoftware nur dann geladen, wenn die Prüfung ergeben hat, daß in dem System kein Fehler vorliegt. Wenn ein Fehler erkannt wird, muß zunächst dieser Fehler behoben werden. Ein Steuergerät ohne Betriebssoftware kann dabei wie eine fehlerhafte Anlage behandelt werden. Das heißt, es wird eine entsprechende Warnlampe angesteuert. Nachdem der Fehler behoben worden ist, ist es dabei zweckmäßig, die Prüfung der Bauteile erneut vorzunehmen, um sicherzugehen, daß kein weiterer Fehler vorliegt. Dabei kann Zeit gespart werden, wenn nicht erneut Prüfsoftware und gegebenenfalls Betriebssoftware umgeladen werden muß.

Bei einer vorteilhaften Ausgestaltung des Verfahrens nach Anspruch 6 werden an das Leitgerät systemspezifische Daten übertragen. Von dem Leitgerät wird dann die Betriebssoftware geladen, die den systemspezifischen Daten entspricht. Dabei kann in einfacher Weise ein Update der Betriebssoftware auch dann realisiert werden, wenn verschiedene Betriebssoftwareversionen für verschiedene Steuergeräte - beispielsweise unterschiedlicher Fahrzeugtypen - vorgesehen sind.

Bei einer weiteren Ausgestaltung des Verfahrens nach Anspruch 8 ist in dem Steuergerät ein Datenspeicher vorhanden, in den Daten während oder nach Abschluß des Prüfvorganges abgelegt werden. Dadurch ist es möglich, beispielsweise über das Herstellungsdatum und die Prüfplatznummer eine Statistik zu erstellen über die Qualitätsrate, die Zahl der Fehlerbehebungen im Service oder auch eine Aussage über die Ausfallsicherheit zu machen.

Als vorteilhaft erweist es sich bei der Ausgestaltung des Verfahrens nach Anspruch 8, daß der Datenspeicher ein nichtflüchtiger Datenspeicher ist, so daß also auch bei einem Abklemmen der Bordbatterie des Kraftfahrzeuges die Daten gespeichert bleiben. Insbesondere für Auswertungen über einen längeren Zeitraum hin zeigt sich dabei, daß keine Datenverluste auftreten.

Bei einer weiteren Ausgestaltung des Verfahrens nach Anspruch 9 erfolgt eine Dokumentation aller Prüfschritte. Vorteilhaft zeigt sich dabei, daß der Prüfvorgang insgesamt nachvollziehbar wird und auch der Prüfvorgang über einen längeren Zeitraum dokumentiert werden kann.

Ein Ausführungsbeispiel der Erfindung ist in der Zeichnung näher dargestellt. Es zeigen dabei:
- Fig. 1:: eine Prinzipdarstellung eines Leitgerätes und eines Steuergerätes im Zusammenwirken,
- Fig. 2:: ein Ausführungsbeispiel eines Ablaufdiagrammes im Leitgerät und
- Fig. 3:: ein Ausführungsbeispiel eines Ablaufdiagrammes im Steuergerät im Zusammenwirken mit dem Ablaufdiagramm nach Fig. 2.

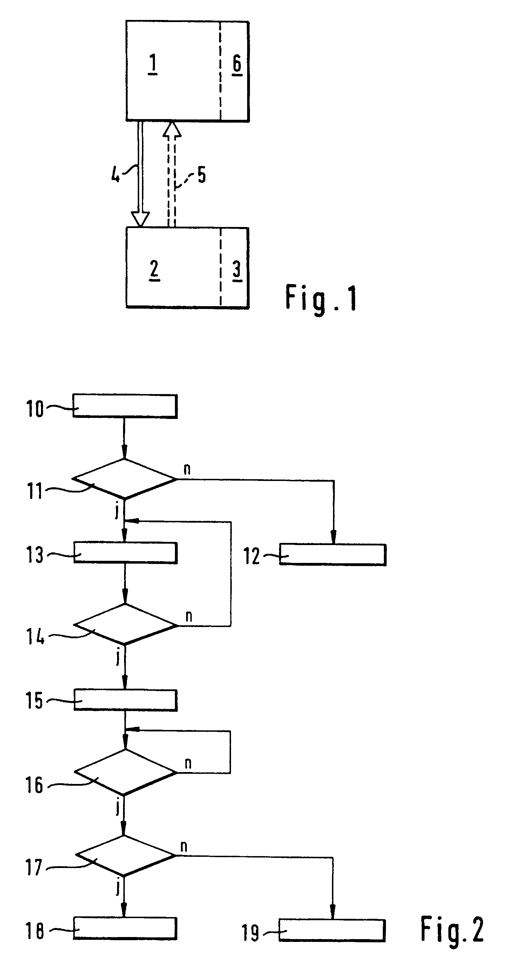

Fig. 1 zeigt ein Leitgerät 1, das einen Speicher 6 aufweist, in dem beispielsweise verschiedene Versionen von Prüfsoftware für die entsprechenden Steuergeräte gespeichert sein können wie auch verschiedene Versionen von Betriebssoftware für die entsprechenden Steuergeräte.

Das Leitgerät 1 kann an ein Steuergerät 2 über eine Verbindungsleitung 4 Daten wie z.B. Prüfsoftware oder Betriebssoftware übertragen. Ebenso kann - beispielsweise über eine separate Datenleitung 5 - eine Datenübertragung von dem Steuergerät 2 zu dem Leitgerät 1 vorgesehen sein.

Vorteilhaft ist in dem Steuergerät 2 ein Datenspeicher 3 vorhanden, in dem Daten über den Prüfvorgang der Funktionsfähigkeit der Bauteile des in ein Kraftfahrzeug eingebauten Systems gespeichert werden können. In dem Datenspeicher 3 gespeicherte Daten können dabei ebenfalls an das Leitgerät 1 übertragen werden. Ebenso können in dem Datenspeicher 3 abhängig von den bei der Prüfung ermittelten Toleranzen der verschiedenen Bauteile, Sensoren, oder Aktoren Parameter gespeichert werden, auf die die Betriebssoftware zugreifen kann und mittels denen während des Betriebes ein optimaler Angleich individuell an alle Komponenten ermöglicht wird.

Fig. 2 zeigt ein Ablaufdiagramm eines Teiles des Verfahrens, das in dem Leitgerät 1 ablaufen kann. In dem Schritt 10 werden dabei zunächst von dem Steuergerät systemspezifische Daten an das Leitgerät übertragen. Diese Übertragung kann dabei beispielsweise erfolgen, indem erkannt wird, daß das Steuergerät 2 an das Leitgerät 1 angeschlossen wurde und - dadurch veranlaßt - die systemspezifischen Daten übertragen werden. Diese systemspezifischen Daten können dabei beispielsweise die Versionsnummer des Steuergerätes 2 betreffen oder auch Informationen über die Systemkonfiguration oder die verwendeten Bauteile.

In dem Schritt 11 wird dann in dem Leitgerät 1 überprüft, ob zu diesen systemspezifischen Daten eine entsprechende Prüfsoftware vorhanden ist.

Ist dies nicht der Fall, erfolgt in dem Schritt 12 eine Anzeige des entsprechenden Fehlers.

Wenn die entsprechende Prüfsoftware vorhanden ist bzw. anhand der übertragenen systemspezifischen Daten durch Änderung von Tabellen, beispielsweise durch Anpassung von Sollwerten oder Toleranzen, oder durch Änderung von Prüfprogrammen in dem Leitgerät 1 generiert werden kann, erfolgt in dem Schritt 13 die Übertragung der entspechenden Prüfsoftware.

In dem Schritt 14 wird überprüft, ob die Übertragung der Prüfsoftware abgeschlossen ist.

Ist dies nicht der Fall, wird in dem Schritt 13 mit der Übertragung der Prüfsoftware fortgefahren.

Wenn die Überprüfung in dem Schritt 14 ergibt, daß die Prüfsoftware vollständig übertragen worden ist, wird in dem Schritt 15 eine entsprechende Übertragungskennung von dem Leitgerät 1 an das Steuergerät 2 übertragen.

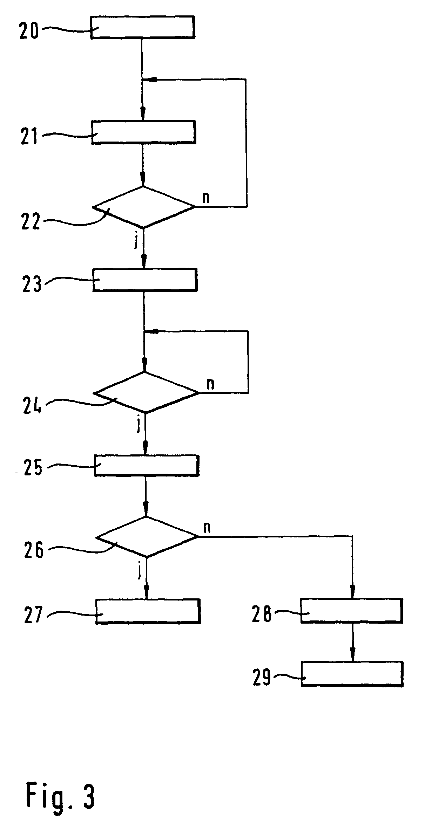

Von dem Steuergerät 2 wird an das Leitgerät 1 eine Prüfungskennung übertragen, wenn der Prüfvorgang abgeschlossen worden ist. Im einzelnen wird dies im Zusammenhang mit Figur 3 erläutert.

In dem Schritt 16 wird überprüft, ob die Prüfungskennung von dem Steuergerät übertragen worden ist.
Ist dies der Fall, erfolgt in dem Schritt 17 eine Überprüfung dieser Prüfungskennung.

Wird anhand der Prüfungskennung festgestellt, daß bei der Prüfung ein Fehler erkannt worden ist, so wird in dem Schritt 18 ein Fehlerprotokoll erstellt. Dies kann beispielsweise durch Auswertung der Prüfungskennung erfolgen, wenn sich dadurch einzelne Fehler individualisieren lassen. Im einfachsten Falle wird angezeigt, daß ein Fehler erkannt worden ist. Es können aber auch weitere Daten ausgewertet werden, die von dem Steuergerät 2 an das Leitgerät 1 übertragen werden, wenn sich durch diese weiteren Daten unter Umständen der erkannte Fehler feststellen läßt.

Wenn die Überprüfung in dem Schritt 17 ergab, daß kein Fehler erkannt wurde, wird die entsprechende Betriebssoftware für das Steuergerät in dem Schritt 19 von dem Leitgerät 1 in das Steuergerät 2 geladen.

Diese Betriebssoftware kann dabei beispielsweise aus dem Speicher 6 des Leitgerätes 1 ausgelesen werden.

Es ist dabei möglich, daß zu Beginn der Übertragung die Betriebssoftware des Steuergerätes 2 zu dem Leitgerät 1 übertragen und dort zwischengespeichert wurde. Es wird dann wieder die Betriebssoftware geladen, die in dem Steuergerät 2 vor der Prüfung geladen war.

Ebenso ist es auch möglich, daß in dem Speicher 6 verschiedene Versionen der Betriebssoftware gespeichert sind und daß anhand der übertragenen systemspezifischen Daten die entsprechende Version der Betriebssoftware ausgewählt wird. Dabei kann beispielsweise in einfacher Weise auch ein Update der Betriebssoftware durchgeführt werden.

Da die Betriebssoftware nicht mehr in dem Steuergerät abgelegt ist, wenn die Prüfsoftware geladen wird, steht der Prüfsoftware eine größere Kapazität zur Verfügung.

Fig. 3 zeigt ein Ausführungsbeispiel eines Ablaufdiagrammes des Verfahrens, das im Steuergerät 2 abläuft und mit dem Ablaufdiagramm des Verfahrens nach Fig. 2 zusammenwirkt, das in dem Leitgerät 1 abläuft.

In dem Schritt 20 werden zunächst systemspezifische Daten von dem Steuergerät 2 an das Leitgerät 1 übertragen.

In dem Schritt 21 wird dann die Prüfsoftware eingelesen, die von dem Leitgerät 1 an das Steuergerät 2 übertragen wird. Die Betriebssoftware des Steuergerätes 2 wurde dabei vorteilhaft vorher zur Zwischenspeicherung an das Leitgerät 1 übertragen oder wird mit der Prüfsoftware überschrieben, d.h. gelöscht. Dies bringt den Vorteil, daß die Prüfsoftware die vollen Ressourcen nutzen kann. Es ist jedoch auch denkbar, die Betriebssoftware in dem Steuergerät 2 zu belassen.

In dem Schritt 22 wird überprüft, ob die Übertragungskennung von dem Leitgerät 1 übertragen wurde. Entsprechend dem Schritt 15 der Figur 2 bedeutet dies, daß die Übertragung der Prüfsoftware abgeschlossen ist.

Wenn in dem Steuergerät 2 die Übertragungskennung noch nicht erkannt worden ist, so wird mit dem Schritt 21 mit dem Einlesen der Prüfsoftware fortgefahren.

Wenn die Übertragungskennung erkannt worden ist, so wird mit dem Schritt 23 fortgefahren, in dem mit der Prüfung der Bauteile des Systems begonnen wird.

In dem Schritt 24 wird überprüft, ob die Prüfung der Bauteile des Systems abgeschlossen ist.

Ist dies nicht der Fall, wird mit der Prüfung der Funktionsfähigkeit der Bauteile des Systems (Schritt 23) fortgefahren.

Andernfalls werden in dem Schritt 25 die während der Prüfung ermittelten Daten in dem Datenspeicher 3 gespeichert. Diese Daten können dabei neben einer Dokumentation der Prüfschritte auch Parameter sein, die abhängig von den bei der Prüfung ermittelten Toleranzen der verschiedenen Bauteile, Sensoren, oder Aktoren Parameter ermittelt werden, auf die die Betriebssoftware später zugreifen kann und mittels denen während des Betriebes eine optimale Anpassung individuell an alle Komponenten ermöglicht wird.

In dem Schritt 26 wird überprüft, ob bei der Prüfung ein Fehler erkannt worden ist.

Ist dies der Fall, so wird entsprechend Schritt 27 ein Fehlerprotokoll erstellt. Es ist möglich, dabei neben der Prüfungskennung mit der Bedeutung "Fehler erkannt" auch die Daten zu übertragen und in dem Leitgerät 1 die nähere Eingrenzung des Fehlers vorzunehmen. Ebenso ist es auch möglich, in dem Steuergerät 2 das Fehlerprotokoll komplett zu erstellen und zur Anzeige an das Leitgerät 1 zu übertragen.

Wenn in dem Schritt 26 kein Fehler erkannt worden ist, wird in dem Schritt 28 die entsprechende Prüfungskennung mit der Bedeutung "fehlerfrei" an das Leitgerät 1 übertragen.

Es ist dabei möglich, in dem Schritt 28 ein Protokoll über die durchgeführten Prüfschritte, die zu einem fehlerfreien Ergebnis geführt haben, zu erstellen und mit der entsprechenden Prüfungskennung mit zu übertragen. Ebenso können in dem Schritt 27 neben dem Fehlerprotokoll auch die Prüfschritte protokolliert werden, die zu einem fehlerfreien Ergebnis geführt haben. Es ist dann möglich, eine Dokumentation aller Prüfschritte zu erstellen.

In dem Schritt 29 wird dann die entsprechende Betriebssoftware von dem Leitgerät 1 in das Steuergerät 2 geladen.

Insgesamt ist also eine einfache Anpassung der Prüfsoftware individuell an die verschiedenen Hersteller, Herstellerwerke oder Fertigungsprozesse möglich, unabhängig von der Betriebssoftware.

## Patentansprüche

1. Verfahren zum Prüfen der Funktionsfähigkeit von Bauteilen eines Systems in einem Kraftfahrzeug, wobei das System wenigstens ein software-betriebenes Steuergerät (2) aufweist, das mit einem Leitgerät (1) verbindbar ist, wobei mittels des Leitgerätes (1) Software in das Steuergerät (2) geladen werden kann (4) und wobei vor einer Prüfung der Funktionsfähigkeit der Bauteile des Systems von dem Leitgerät (1) eine Prüfsoftware in das Steuergerät (2) geladen wird (13) und nach dem Durchführen der Prüfung (16,17) die Betriebssoftware, mittels der die Steuerung und/oder die Regelung des Systems erfolgt, von dem Leitgerät (1) in das Steuergerät (2) geladen wird, **dadurch gekennzeichnet, daß** abhängig von den bei der Prüfung ermittelten Daten und/oder Toleranzen der verschiedenen Bauteile, Sensoren oder Aktoren Parameter im Steuergerät (2) gespeichert werden (3), auf die die Betriebssoftware zugreifen kann und mittels derer während des Betriebs eine individuelle Anpassung an alle Komponenten ermöglicht wird (25).

2. Verfahren nach Anspruch 1, **dadurch gekennzeichnet, daß** nach dem Herstellen der Verbindung zwischen Steuergerät (2) und Leitgerät (1) das Laden der Prüfsoftware in das Steuergerät (2) selbsttätig erfolgt.

3. Verfahren nach Anspruch 1 oder 2, **dadurch gekennzeichnet, daß** von dem Steuergerät (2) an das Leitgerät (1) systemspezifische Daten übertragen werden (10, 20) und von dem Leitgerät (1) die Prüfsoftware in das Steuergerät (2) geladen wird, die den systemspezifischen Daten entspricht.

4. Verfahren nach einem der Ansprüche 1 bis 3, **dadurch gekennzeichnet, daß** nach dem Abschluß der Prüfung (16, 17) die Betriebssoftware selbsttätig geladen wird (19).

5. Verfahren nach Anspruch 3 oder 4, **dadurch gekennzeichnet, daß** die Betriebssoftware nur dann geladen wird, wenn die Prüfung ergeben hat, daß in dem System kein Fehler vorliegt (17, 19).

6. Verfahren nach einem der Ansprüche 3 bis 5, **dadurch gekennzeichnet, daß** von dem Steuergerät (2) an das Leitgerät (1) systemspezifische Daten übertragen werden (10,20) und von dem Leitgerät (1) die Betriebssoftware in das Steuergerät (2) geladen wird, die den systemspezifischen Daten entspricht.

7. Verfahren nach einem der Ansprüche 1 bis 6, **dadurch gekennzeichnet, daß** in dem Steuergerät (2) ein Datenspeicher (3) vorhanden ist, in den Daten während oder nach Abschluß des Prüfvorganges abgelegt werden.

8. Verfahren nach Anspruch 7, **dadurch gekennzeichnet, daß** der Datenspeicher (3) ein nichtflüchtiger Datenspeicher ist.

9. Verfahren nach einem der Ansprüche 1 bis 8, **dadurch gekennzeichnet, daß** eine Dokumentation aller Prüfschritte erfolgt (27, 28).

## Claims

1. A process of testing the operability of components of a system in an automotive vehicle, with the system comprising at least one software-operated controller (2) adapted to be connected to an input station (1), wherein software can be uploaded in the controller (2) through the input station (1), and wherein a test software is uploaded (13) from the input station (1) in the controller (2) prior to a check for operability of the components of the system, and after completion of the check (16, 17), the operating software, by way of which the control and/or regulation of the system is effected, is uploaded from the input station (1) into controller (2),
**characterized in that** in response to the data and/or tolerances of the various components, sensors, or actuating units determined during the check, such parameters are stored (3) in the controller (2) to which the operating software has access and by means of which, during the operation, an individual adaptation to all components can be achieved (25).

2. A process according to claim 1,
**characterized in that** after a connection between the controller (2) and the input station (1) has been established, the test software is automatically uploaded in the controller (2).

3. A process according to claim 1 or 2,
**characterized in that** system-specific data is transmitted (10,20) from the controller (2) to the input station (1), and that the test software which corresponds to the system-specific data is uploaded from the input station (1) to the controller (2).

4. A process according to any one of claims 1 to 3,
**characterized in that** upon completion of the check (16,17) the operating software is automatically uploaded (19).

5. A process according to claim 3 or 4,
**characterized in that** the operating software is uploaded only if the test conveys that no error is contained in the system (17,19).

6. A process according to any one of claims 3 to 5,
**characterized in that** system-specific data is transmitted (10,20) from the controller (2) to the input station (1) and that the operating software which corresponds to the system-specific data is uploaded from the input station (1) to the controller (2).

7. A process according to any one of claims 1 to 6,
**characterized in that** a data storage unit (3) is provided in the controller (2) in which data is stored during the test operation or upon completion thereof.

8. A process according to claim 7,
**characterized in that** the data storage unit (3) is a nonvolatile data memory.

9. A process according to any one of claims 1 to 8,
**characterized in that** a documentation of all test steps (27, 28) is set up.

## Revendications

1. Procédé de contrôle de l'aptitude à fonctionner de composants d'un système dans un véhicule automobile, le système comprenant au moins un dispositif de commande (2) qui est commandé par logiciel et qui peut être relié à un dispositif directeur (1), selon lequel un logiciel peut être chargé (4) dans le dispositif de commande (2) au moyen du dispositif directeur (1), tandis qu'avant un contrôle de l'aptitude au fonctionnement des composants du système, un logiciel de contrôle est chargé (13) dans le dispositif de commande (2) par le dispositif directeur (1) et qu'après l'exécution du contrôle (16, 17), le logiciel de fonctionnement au moyen duquel la commande et/ou la régulation du système a lieu est chargé dans le dispositif de commande (2) par le dispositif directeur (1), **caractérisé en ce qu'**en fonction des tolérances des différents composants, capteurs ou actionneurs et/ou des données déterminées lors du contrôle, il est procédé à la mise en mémoire (3), dans le dispositif de commande (2), de paramètres auxquels le logiciel de fonctionnement peut avoir accès et au moyen desquels une adaptation individuelle à tous les composants est permise (25) pendant le fonctionnement.

2. Procédé suivant la revendication 1, **caractérisé en ce qu'**après la réalisation de la liaison entre le dispositif de commande (2) et le dispositif directeur (1), le chargement du logiciel de contrôle dans le dispositif de commande (2) a lieu automatiquement.

3. Procédé suivant la revendication 1 ou 2, **caractérisé en ce que**, du dispositif de commande (2) au dispositif directeur (1), des données spécifiques de système sont transmises (10, 20) et, à partir du dispositif directeur (1), il est procédé au chargement, dans le dispositif de commande (2), du logiciel de contrôle qui correspond aux données spécifiques de système.

4. Procédé suivant l'une des revendications 1 à 3, **caractérisé en ce qu'**après l'achèvement du contrôle (16, 17), le logiciel de fonctionnement est chargé automatiquement (19).

5. Procédé suivant la revendication 3 ou 4, **caractérisé en ce que** le logiciel de fonctionnement n'est chargé que lorsque que le contrôle a donné pour résultat qu'aucune défaillance n'est présente (17, 19) dans le système.

6. Procédé suivant l'une des revendications 3 à 5, **caractérisé en ce que**, du dispositif de commande (2) au dispositif directeur (1), des données spécifiques de système sont transmises (10, 20) et, à partir du dispositif directeur (1), il est procédé au chargement, dans le dispositif de commande (2), du logiciel de fonctionnement qui correspond aux données spécifiques de système.

7. Procédé suivant l'une des revendications 1 à 6, **caractérisé en ce que**, dans le dispositif de commande (2), il est prévu une mémoire de données (3) dans laquelle des données sont déposées pendant ou après l'achèvement de l'opération de contrôle.

8. Procédé suivant la revendication 7, **caractérisé en ce que** la mémoire de données (3) est une de mémoire morte de données.

9. Procédé suivant l'une des revendications 1 à 8, **caractérisé en ce qu'**une documentation de tous les pas de contrôle est effectuée (27, 28).
